# EUROPEAN PATENT APPLICATION

(11) **EP 2 819 423 A1**
(43) Date of publication of application: **31.12.2014**
(21) Application number: 14173241.2
(22) Date of filing: 20.06.2014
(51) Int. Cl.: H04N 21/434, H04N 21/435, H04N 21/43, H04N 21/8545, H04N 21/6543

(54) **Image receiving apparatus, method of providing image content, and computer-readable recording medium to execute the method**

(30) Priority: 28.06.2013 KR 20130075946
(71) Applicant: Samsung Electronics Co., Ltd, Gyeonggi-do 443-742 (KR)
(72) Inventor: Song, Hak-sup, Gyeonggi-do (KR); Park, Gyu-tae, Seoul (KR); Koo, Sung-wook, Seoul (KR); Kim, Tae-ho, Gyeonggi-do (KR); Wang, Tae-ho, Seoul (KR); Lee, Kang-rok, Gyeonggi-do (KR); Lee, Young-oh, Gyeonggi-do (KR)
(74) Representative: Brandon, Paul Laurence

(57) **Abstract**

A method apparatus of providing image content are provided. The method includes detecting application information inserted in an image signal of the image content; obtaining display time information of the image content from the application information inserted in the image signal; displaying the image content; and executing an application corresponding to the image content based on a display time of the image content.

## Description

### RELATED APPLICATION

This application claims priority from Korean Patent Application No. 10-2013-0075946, filed on June 28, 2013, in the Korean Intellectual Property Office, the disclosure of which is incorporated herein in its entirety by reference.

### BACKGROUND

### 1. Field

Apparatuses and methods consistent with the exemplary embodiments relate to an image receiving apparatus, a method of providing image content, and a computer-readable recording medium to execute the method.

### 2. Description of the Related Art

An image receiving apparatus, such as a TV, may receive image content in various ways. For example, analog signals may be received from an antenna, a set-top box, or the Internet. Then, the image receiving apparatus outputs audio or image signals included in the received image content via a display, a speaker, and the like. While the image content is being received, the image signals are modified and processed in the set-top box or other devices. Accordingly, even though the image receiving apparatus may be improved so that it can process and use various types of additional information, the types of information that it can actually receive and use is limited.

### SUMMARY

An exemplary embodiment independently receives and uses application information.

An exemplary embodiment executes an application while image content is being displayed on a screen, so that a user can concentrate more on watching the image content.

An exemplary embodiment provides image content by using various sensors included in an image receiving apparatus, such as an audio sensor or a camera so as to provide interactive applications.

Additional aspects will be set forth in part in the description which follows and, in part, will be apparent from the description, or may be learned by practice of the presented exemplary embodiments.

According to an exemplary embodiment, a method of providing image content includes detecting application information inserted in an image signal of the image content; obtaining display time information of the image content from the application information inserted in the image signal; displaying the image content; and executing an application corresponding to the image content, based on a display time of the image content.

The application information may include application insertion information, inserted in a first frame of the image content which indicates whether the application information is included in the image content; and image time length information representing a length of time of the image content.

The method may further include obtaining information about a display start time point by using the application insertion information.

The method may further include when the application insertion information indicates that the application information is included in the image content, identifying whether an application corresponding to the application information is installed in a display device which displays the image content; if the application is installed in the display device, executing the application, based on the display time of the image content; and if the application is not installed, installing the application in the display device.

The image content may be advertisement content.

The application information may include application force stop information indicating whether the application is to be forcedly stopped when displaying of the image content is finished. The method may further include, if the application force stop information indicates that the application is to be forcedly stopped, forcing the application that is being executed to stop when the display time of the image content has elapsed.

The application information may include at least one of application location information indicating a storage location of an execution file of the application; application execution section information indicating an execution time of the application; and overlapping information indicating whether the application is to be displayed overlapping an image of the image content.

According to an exemplary embodiment , an image receiving apparatus includes a receiver configured to receive image content; a display configured to display an image signal included in the image content; an application information detector configured to detect application information inserted in the image signal; a time information obtainer configured to obtain display time information of the image content from the application information inserted in the image signal; and an application executor configured to execute an application corresponding to the image content, based on a display time of the image content.

The application information may include application insertion information, inserted in a first frame of the image content and indicating whether the application information is included in the image content; and image time length information representing a length of time of the image content.

The time information obtainer may obtain information about a display start time point by using the application insertion information.

When the application insertion information indicates that the application information is included in the image content, the application executor is configured to identify whether an application corresponding to the application information is installed in the image receiving apparatus; if the application is installed, the application executor is configured to execute the application based on the display time of the image content; and if the application is not installed, the application executor is configured to install the application in the image receiving apparatus.

The image content may be advertisement content.

The application information may include application force stop information indicating whether the application is to be forcedly stopped when displaying of the image content is finished. If the application force stop information indicates that the application is to be forcedly stopped, the application executor is configured to force the application that is being executed to stop when the display time of the image content has elapsed.

The application information may include at least one of application location information representing a storage location of an execution file of the application; application execution section information representing an execution time of the application; and overlapping information representing whether the application is to be displayed overlapping an image of the image content.

According to an exemplary embodiment , a computer-readable recording medium having stored thereon computer program codes to execute a method of providing image content when the codes are read and executed by a processor, the method includes detecting application information inserted in an image signal of image content; obtaining display time information of the image content from the application information inserted in the image signal; displaying the image content; and executing an application corresponding to the image content, based on a display time of the image content.

### BRIEF DESCRIPTION OF THE DRAWINGS

These and/or other aspects will become apparent and more readily appreciated from the following description of the exemplary embodiments, taken in conjunction with the accompanying drawings of which:
FIG. 1 is a view illustrating an image receiving apparatus, according to an exemplary embodiment;
FIG. 2 is a view illustrating a structure of the image receiving apparatus, according to an exemplary embodiment;
FIG. 3 is a view illustrating application information included in image content, according to an exemplary embodiment;
FIG. 4 is a view illustrating application information included in image content, according to another exemplary embodiment;
FIG. 5 is a view illustrating screens where image content and an application are displayed together, according to an exemplary embodiment;
FIG. 6 is a flowchart illustrating a method of providing image content, according to an exemplary embodiment;
FIG. 7 is a view illustrating information regarding whether or not an application is inserted in the image content, according to another exemplary embodiment;
FIG. 8 is a view showing a screen for installing an application, according to another exemplary embodiment;
FIG. 9 is a view illustrating a method of inserting application information in image content, according to another exemplary embodiment;
FIG. 10 is a flowchart illustrating a method of providing image content, according to another exemplary embodiment;
FIG. 11 is a flowchart illustrating a method of providing image content, according to another exemplary embodiment; and
FIG. 12 is a view illustrating a screen whereon an application is displayed, according to another exemplary embodiment.

### DETAILED DESCRIPTION

Hereinafter, exemplary embodiments will be described more fully with reference to the accompanying drawings. Detailed descriptions of the exemplary embodiments that are obvious to one of ordinary skill in the art may be omitted.

The specification and the drawings do not limit the exemplary embodiments, and the scope and spirit of the exemplary embodiments are defined by the claims. The terms used herein are interpreted to correspond to the meaning and concept of technical ideas so as to appropriately describe the exemplary embodiments. As used herein, expressions such as "at least one of," when preceding a list of elements, modify the entire list of elements and do not modify the individual elements of the list.

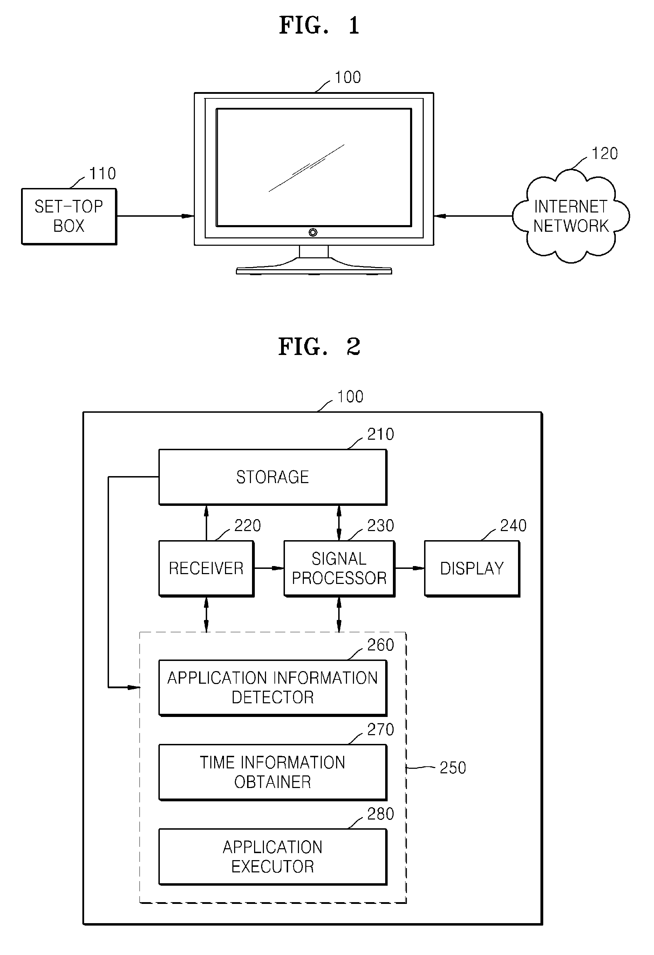

FIG. 1 is a block diagram illustrating an image receiving apparatus 100, according to an exemplary embodiment. The image receiving apparatus 100 receives image content from an external source and displays the image content on a screen. The image receiving apparatus 100 may be a TV. As illustrated in FIG. 1, the image content may be input from a set-top box 110, or may be received from an antenna or an Internet network 120.

When the image receiving apparatus 100 receives the image content via the set-top box 110, a sound signal and an image signal, which characterize the image content, are input to the image receiving apparatus 100. Then, the image receiving apparatus 100 reproduces the image content. However, when additional information, such as application information, electronic program guide (EPG) information, or image meta information, is included in the image content, the additional information may all be processed in the set-top box 110, and may not be able to be transmitted to the image receiving apparatus 100.

When an image signal is received from the antenna or the Internet network 120, additional information may or may not be transmitted to the image receiving apparatus 100, depending on a format of the image content signal provided by a broadcasting station, a contents provider, and the like.

According to an exemplary embodiment, even when it is uncertain whether additional information related to image content may or may not be transmitted depending on an image signal transmission environment, the application information related to the image content may be received and used by the image receiving apparatus 100. Also, a user may use an application related to the image content depending on a time length of the image content. Thus, the image receiving apparatus 100 can be more widely used and its efficiency may be increased, and a user can concentrate on watching the image content.

FIG. 2 is a block diagram illustrating a structure of the image receiving apparatus 100, according to an exemplary embodiment. The image receiving apparatus 100 according to the exemplary embodiment includes a storage 210, a receiver 220, a signal processor 230, a display 240, and a controller 250.

The storage 210 stores control information for the image receiving apparatus 100, and the application information related to the image content. The storage 210 is a non-volatile storage medium, such as hard disk drive (HDD), flash memory, solid-state disk (SSD), and magnetic recording medium.

The receiver 220 receives an image content signal. The receiver 220 may be an antenna, an interface device that is connected to the set-top box 110, or an interface device connected to an Internet network. The image content may be advertisement content, a broadcasting program, a video-on-demand (VOD) content, or the like.

The signal processor 230 processes the image content signal that is received by the receiver 220, and provides the image content signal to the display 240 and the controller 250. In order to process the image signal of the image content and display the image signal on the display 240, the signal processor 230 may execute a predetermined image process. Also, the signal processor 230 may execute processes such as de-multiplexing, decoding, scaling, image quality adjustment, and image quality improvement.

The display 240 receives the image signal that is processed by the signal processor 230, and thus displays the image content. The display 240 may be a liquid crystal display (LCD) apparatus, a plasma display panel, an organic light-emitting display apparatus, or the like.

Although not illustrated in FIG. 2, the image receiving apparatus 100 may include a speaker for outputting audio signals, a light-emitting diode (LED) display for displaying a status of the image receiving apparatus 100, and a sensor for receiving a sound input or a gesture input from a user.

The controller 250 controls the operations of the image receiving apparatus 100. The controller 250 according to the exemplary embodiment may include an application information detector 260, a time information obtainer 270, and an application executor 280.

The application information detector 260 detects and extracts the application information that is included in the image content. According to an exemplary embodiment, the image content includes the application information in image data. For example, the application information may be encoded as a two-dimensional (2D) barcode, a quick response (QR) code, a watermark, or the like, and thus, may be recorded in some pixels of the image data. The application information detector 260 acquires the application information by detecting and then decoding the application information recorded in the pixels of the image data.

The application information is information about an application that may be executed during display of the image content in which the application information is inserted, and may include a plurality of information elements. For example, the application information may include at least one of or a combination of the information elements described below:
- Application insertion information indicating whether or not the application information is included in the image content;
- Image time length information indicating a length of time of the image content;
- Application identification information indicating a type of an application;
- Application execution section information indicating an execution time of an application;
- Overlapping information indicating whether or not an application is to be displayed by being overlapped on an image of the image content;
- Application force stop information indicating whether or not an application is to be forcedly stopped when the image content is finished; and
- Application location information indicating a server address, a webpage, or the like from which an execution file of an application or information related to an application may be downloaded.

According to an exemplary embodiment, while the image content is being displayed, the application information as described above may be used to install or execute an application related to the image content.

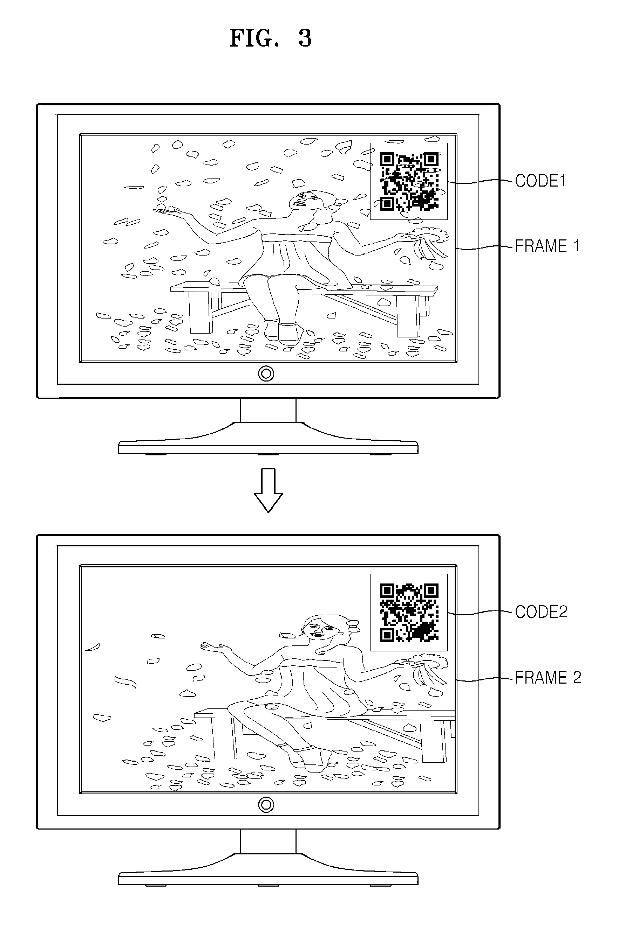

FIG. 3 is a view illustrating the application information included in the image content, according to an exemplary embodiment.

According to the exemplary embodiment, a plurality of information elements, which are included in the application information, may be inserted in each of a plurality of frames of the image content. For example, if the application information includes application insertion information and image time length information, the application insertion information may be inserted in a first frame FRAME 1 of the image content as a first code CODE 1, and the image time length information may be inserted in a second frame FRAME 2 of the image content as a second code CODE 2. Also, a location where the first code CODE 1 and the second code CODE 2 are inserted may be predetermined. For example, the location of the first code CODE 1 and the second code CODE 2 may be pre-set by the user or may be pre-set in the image receiving apparatus during manufacture. The exemplary embodiments are not limited to these examples, and the location can be predetermined prior to the display of the first code CODE 1 and the second code CODE 2.

According to the exemplary embodiment, the application information detector 260 extracts an information element from a predetermined frame. For example, the application information detector 260 may extract the application insertion information from the first frame FRAME 1, and may extract the image time length information from the second frame FRAME 2. In this case, the application information detector 260 may extract the first code CODE 1 and the second code CODE 2 of the application information from a predetermined location of a certain frame.

According to an exemplary embodiment, the application information detector 260 may already include information about which information element of the application information is included in a certain frame, in the storage 210. In other exemplary embodiments, the application information detector 260 may read information about which information element of the application information is included in which frame, from the application information that is inserted in received image content.

When each information element of an application is respectively inserted in a predetermined frame, a size of a region of the predetermined frame used for inserting the application information may be reduced. Thus, according to the exemplary embodiment, image quality deterioration that may occur by inserting the application information may be reduced. Also, according to the exemplary embodiment, since the size of the region for inserting the application information is reduced, a user may not recognize a code that corresponds to the application information.

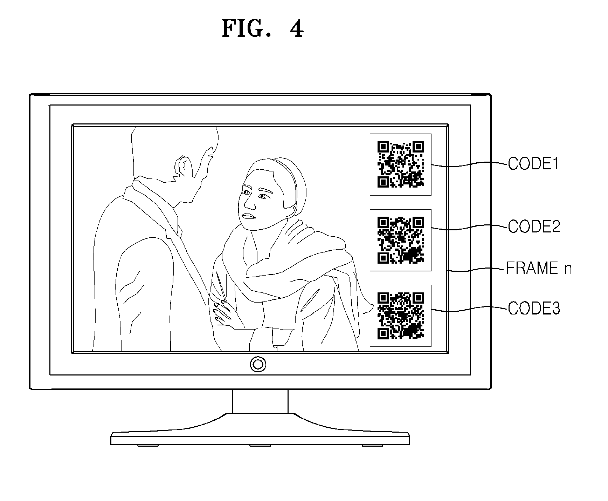

FIG. 4 is a view illustrating the application information included in the image content, according to another exemplary embodiment.

According to an exemplary embodiment, a plurality of information elements, which are included in the application information, may be inserted together in at least one frame of image content, and a location where the plurality of information elements are inserted may be predetermined. For example, when the application information is included in an nth frame FRAME n, the first code CODE 1 corresponding to the application insertion information may be inserted in a first region, the second code CODE 2 corresponding to the image time length information may be inserted in a second region, and the third code CODE 3 corresponding to the application identification information may be inserted in a third region. Also, the application information may be inserted in only one frame or in a plurality of frames. The decision whether to insert the application information in a certain frame may be predetermined.

According to an exemplary embodiment, the application information detector 260 may already include information in the storage 210 about which frame includes the application information and where the application information is located in the frame. In other exemplary embodiments, the application information detector 260 may read from the application information that is inserted in the received image content information about which frame includes the application information and where the application information is located in the frame.

According to the exemplary embodiment, since a plurality of information elements are inserted in at least one frame, various pieces of information may be simultaneously acquired. In detail, information that is necessary at the beginning of displaying the image content may be disposed in an earlier frame (for example, a first frame), and thus, such information may be acquired when the image content starts being displayed.

According to another exemplary embodiment, some information elements that are included in the application information may be inserted using the method illustrated in FIG. 3, and some information elements may be inserted using the method illustrated in FIG. 4.

The time information obtainer 270 acquires display time information of the image content from the application information of the image content. Display time information represents a display time of the image content, and may include, for example, information about a start time point of image content, or a display time length of image content.

Information about a start time point of the image content may be acquired by identifying a first frame of the image content from the application information. For example, if a code that corresponds to the first frame of the image content is detected in a certain frame, a time point when certain frame is displayed may be identified as the start time point of the image content. Information about a display time length of the image content may be acquired from the image time length information that is included in the application information.

The application executor 280 executes an application that corresponds to the application information. According an exemplary embodiment, an application is executed depending on a display time of the image content. According to an exemplary embodiment, an application may be started from a time point when displaying of the image content starts, and may be forced to stop when the displaying of the image content is finished. Also, an application may be proceed depending on the display time of the image content. In addition, based on application force stop information that is included in the application information, the application may or may not be forced to stop at a time point when the displaying of the image content is finished. Based on the application execution section information, the application may be started and finished at a time point after a predetermined amount of time has passed from a display start time point of the image content.

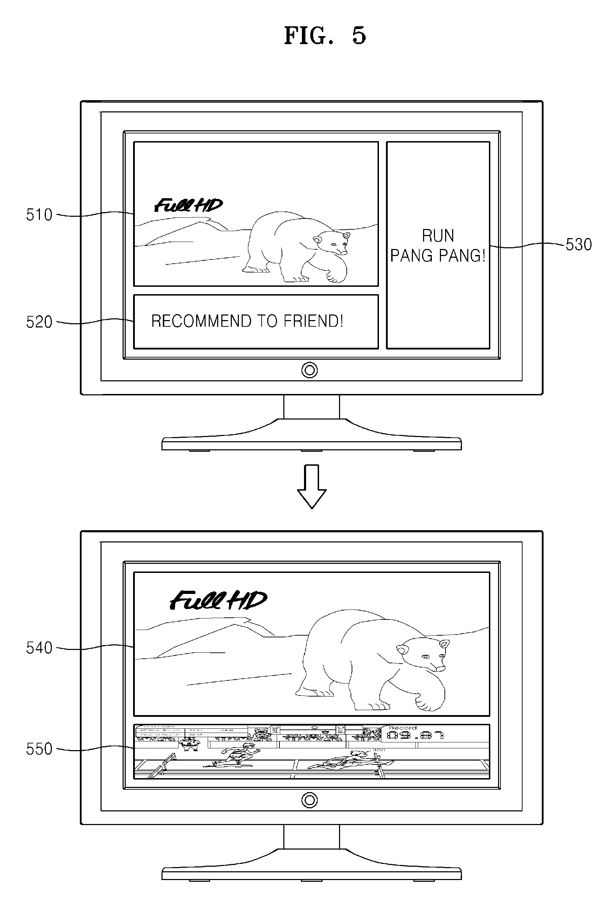

FIG. 5 is a view illustrating a screen on which the image content and the application are displayed together, according to an exemplary embodiment.

Referring to FIG. 5, while the image content is being displayed, the application may be executed, and thus, the image content and the application may be displayed together on the screen. According to an exemplary embodiment, when displaying of the image content is started, image content screen 510 and a plurality of application screens 520 and 530 are displayed together. In this case, the plurality of application screens 520 and 530 may be displayed in a selectable form. That is, a user can select application screen 520 or application screen 530 by using a remote control device or any mechanism to select application screen 520 and application screen 530. When a user selects an application, a screen of the selected application is expanded, and a predetermined process of the selected application is executed. Thus, image content screen 540 and an application execution screen 550 may be displayed together.

In other exemplary embodiments, when displaying of the image content is started, a predetermined application that corresponds to the image content may be automatically executed. In this case, when displaying of the image content is started, the image content screen 540 and the application execution screen 550 of the predetermined application may be displayed together.

According to an exemplary embodiment, the application may be executed based on a display time of the image content, and thus, a user may concentrate more on watching the image content. For example, when the image content is advertisement content, while the advertisement content is being displayed, a game related to the advertisement may be executed and then may be stopped when the advertisement is finished. Thus, since a user may play the game only while the advertisement is being displayed, the user may concentrate more on watching the advertisement content. Furthermore, if the game provides a predetermined benefit such as a free gift, points, or the like, since the user may play the game only while the advertisement is being displayed, the user may concentrate on the game and the advertisement more than in a case when the game is played other times. Therefore, according an exemplary embodiment, the user may be focus more on watching the image content.

In addition, according to one or more exemplary embodiment, since the image receiving apparatus 100 independently executes the application, the image receiving apparatus 100 may use predetermined sensors (for example, an audio sensor, or a camera) provided in the image receiving apparatus 100 and receive a user's input while the application is being executed. Therefore, the image receiving apparatus 100 may receive various inputs from various users while the application is being executed, and may provide an interactive application.

According to an exemplary embodiment, since the image receiving apparatus 100 independently executes the application, a manufacturer of the image receiving apparatus 100 may benefit from use of the application.

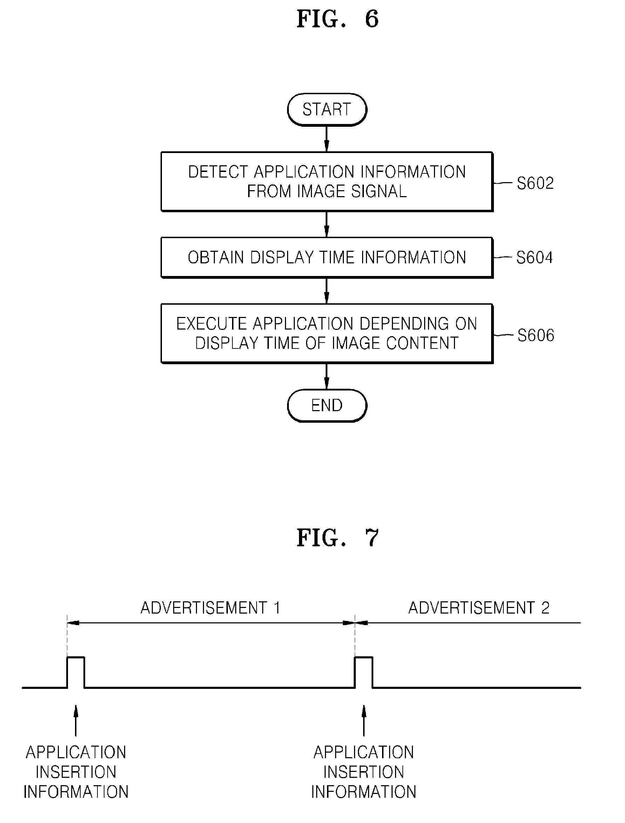

FIG. 6 is a flowchart illustrating a method of providing image content, according to an exemplary embodiment.

According to the method of providing image content according to an exemplary embodiment , when the image content is received, the application information from an image signal that is included in the image content is detected (S602). As described above, the application information may be inserted in a predetermined region of image data as a portion of the image content. The detected application information is decoded by the image receiving apparatus 100 that has received the image content.

When the application information is detected and then decoded, display time information about the image content is acquired from the application information (S604). Display time information represents a display time of the image content, and may include, for example, information about a starting time point of the image content or a display time length of the image content.

Next, depending on the display time of the image content, an application that corresponds to the application information is executed (S606). According to the exemplary embodiment, the application may be started or stopped depending on the display time of the image content. Also, the application may proceed depending on the display time of the image content.

The operations S602, S604, and S606 of the method of providing image content may be executed while the image content is being displayed.

FIG. 7 is a view illustrating application insertion information, according to another exemplary embodiment.

According to the exemplary embodiment, the application information may include application insertion information that is inserted in a first frame of the image content. That is, a code that corresponds to the application insertion information may be inserted as image data at a predetermined location of the first frame of the image content. For example, as shown in FIG. 7, when a plurality of advertisements are sequentially displayed, the application insertion information is inserted in a first frame of advertisement 1 and in a first frame of advertisement 2.

According to the exemplary embodiment, application insertion information is inserted in a first frame of each image content so that when the application information is not inserted in the image content, a process for detecting the application information is not executed when the image content is displayed. That is, when the application insertion information indicates that the application information is not included in the image content, a process for detecting the application information may not be executed when the image content is displayed. To achieve this, when image content is input, the application information detector 260 detects and reads application insertion information from a first frame of the image content. If the application information is detected in the first frame of the image content, the application information detector 260 detects and decodes application information from other frames of the image content. The application information detector 260 only detects and decodes application information from other frames of the image content if the application information is detected in the first frame of the image content.

According to an exemplary embodiment, the load of computation for detecting the application information may be reduced. Also, less power may be consumed when processing the application information.

Also, according to an exemplary embodiment, a display start time point of the image content may be identified by detecting the application insertion information included in the first frame of the image content. That is, since the application insertion information is inserted in the first frame of the image content, when the application insertion information is detected in a certain frame, a point in time when the certain frame is displayed may be determined as a display start time point of the image content. To achieve this, when the application insertion information is detected, the time information obtainer 270 determines the point in time that the certain frame including the application insertion information is displayed as a start time point of the image content.

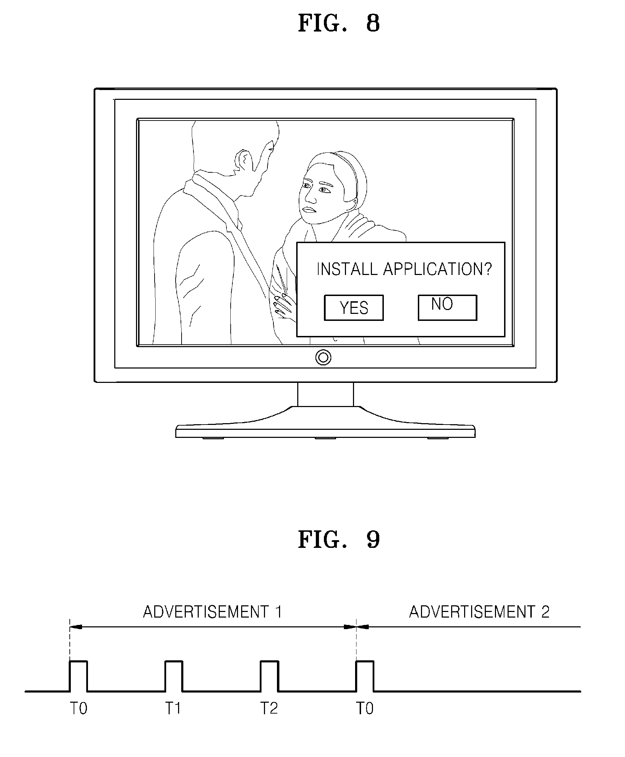

FIG. 8 is a view illustrating a screen for installing an application, according to another exemplary embodiment.

According to another exemplary embodiment, when the application insertion information indicates that the application information is included in the image content, the application executor 280 identifies whether or not an application corresponding to the application information is installed in the image receiving apparatus 100. A type of the application may be identified according to the application identification information that is included in the application information. The application executor 280 may identify whether or not the application is installed in the image receiving apparatus 100 by investigating whether or not the application installed in the storage 210

If the application is installed in the image receiving apparatus 100, the application executor 280 executes the application. If the application is not installed, the application executor 280 installs the application in the image receiving apparatus 100. As illustrated in FIG. 8, before the application is installed, the application executor 280 may ask a user whether or not they would like to install the application, and if the user permits installation of the application, then the application may be installed. An access location for downloading an application execution file may be acquired from the application location information that is included in the application information. The application location information may indicate a server, a webpage, or the like where the application execution file is stored.

According to the exemplary embodiment, if the application is not installed in the image receiving apparatus 100, only installation of the application is performed when the image content is displayed. After the application is completely installed, when the image content corresponding to the application is received again, the application is executed. When the image content is short, such as advertisement content, installation and execution of the application may not be performed while the image content is being displayed. Thus, when the application information is received in the image receiving apparatus 100 for the first time, only installation of the application is performed. When the application information is received again, the image receiving apparatus 100 may thus execute the application.

FIG. 9 is a view illustrating a method of inserting the application information, according to another exemplary embodiment.

According to another exemplary embodiment, the application information may include information about a display start time of the image content, and information about a time point after a predetermined amount of time has passed from a display start time point of the image content. For example, as illustrated in FIG. 9, information about display start time points T0 of the image content and information about certain time points T1 and T2 of the image content may be inserted in frames of the image content.

According to the exemplary embodiment, information about an elapsed time after the image content has started to be displayed or information about a time point when a certain frame has been displayed may be identified. Accordingly, more detailed information about the display time may be acquired. Thus, by using the more detailed information about the display time, the application may be more accurately and precisely executed depending on the display time of the image content. For example, a process 0 of the application may be executed at the time point T0, a process 1 may be executed at the time point T1, and a process 2 may be executed at the time point T2.

According to another exemplary embodiment, the display time information about the image content may be acquired by monitoring the reproduction time of the image content from the display start time point of the image content.

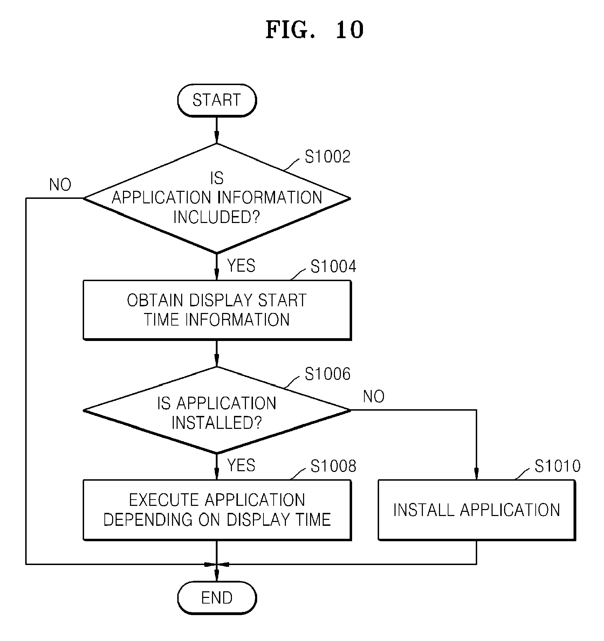

FIG. 10 is a flowchart illustrating a method of providing image content, according to another exemplary embodiment.

According to the method of providing image content according to the exemplary embodiment, when image content is received, it is determined whether or not the application information is included in the image content (S1002). Whether or not the application information is included in the image content may be determined by detecting and then decoding application insertion information that is inserted in a first frame of the image content.

If the application information is included in the image content, display start time information is acquired (S1004) by determining a time point when a frame where the application insertion information is detected. The time point when a frame of application insertion information is detected is the display start time point of the image content.

Next, it is determined whether or not an application corresponding to the application information is installed (S1006). A type of the application may be identified from application identification information that is included in the application information. Whether or not the application is installed may be identified by determining whether or not the application is installed in the storage 2101.

If the application is installed, the application is executed based on the display time of the image content (S1008). According to an exemplary embodiment, as illustrated in FIG. 9, information about a display time of the image content may be acquired from a plurality of frames, and accordingly, the application may be executed depending on the display time of the image content.

If the application is not installed, a location of an application execution file may be acquired from application location information, and thus, the application may be installed (S1010). In this case, as illustrated in FIG. 8, a user may be asked whether or not to install the application, and the application may be installed according to the user's confirmation.

According to another exemplary embodiment, when the display time of the image content has elapsed, the application executor 280 may force the application to stop.

Whether or not the display time of the image content has elapsed may be identified from information about a display start time point of the image content and image time length information that is included in the application information. That is, the application executor 280 acquires information about a display start time point of the image content from the application insertion information included in the application information. When a certain amount of time according to the image time length information has passed, the application executor 280 determines that a display time of the image content has elapsed.

As another example, the application executor 280 may determine that a display time of the image content has elapsed by detecting application insertion information included in following image content.

When the display time of the image content has finished, the application executor 280 may or may not force an application that is being executed to stop according to application force stop information. For example, if the image content is advertisement content, when the advertisement is finished, an application that is being executed and is related to the advertisement may be stopped.

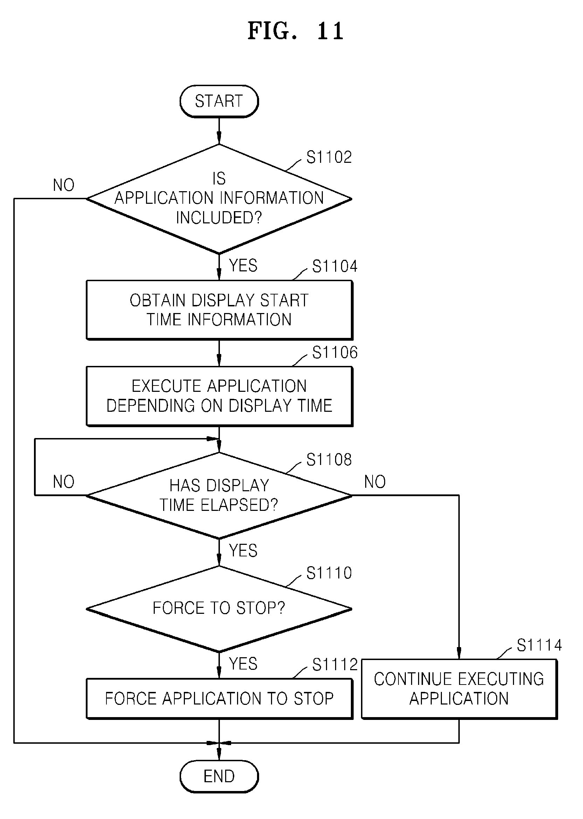

FIG. 11 is a flowchart illustrating a method of providing image content, according to another exemplary embodiment.

According to the method of providing image content according to the exemplary embodiment, when the image content is received, it is determined whether or not application information is included in the image content (S1102) by detecting and then decoding application insertion information that is inserted in a first frame of the image content.

If application information is included in the first frame of the image content, the display start time information is acquired (S1104) by determining a point in time when a frame where the application insertion information is detected. The point in time when the frame where the application insertion information is detected is the display start time point.

Next, an application corresponding to the application information is executed depending on display time of the image content (S1106).

While the application is being executed, when the display time of the image content has elapsed (S1108), it is determined whether or not the application should be forcedly stopped (S1110). The end of the display time of the image content may be identified from information about a display start time point of the image content and image time length information that is included in the application information. As another example, the end of the display time of the image content may be identified by detecting application insertion information that is included in following image content. Also, whether or not the application is to be forcedly stopped may be determined based on application force stop information included in the application information.

If application force stop information indicates that the application is to be forcedly stopped, the application is forced to stop when the display time of the image content has elapsed (S1112). If application force stop information does not indicate that the application is not to be forcedly stopped even though the display time of the image content has elapsed, execution of the application is continued (S1114).

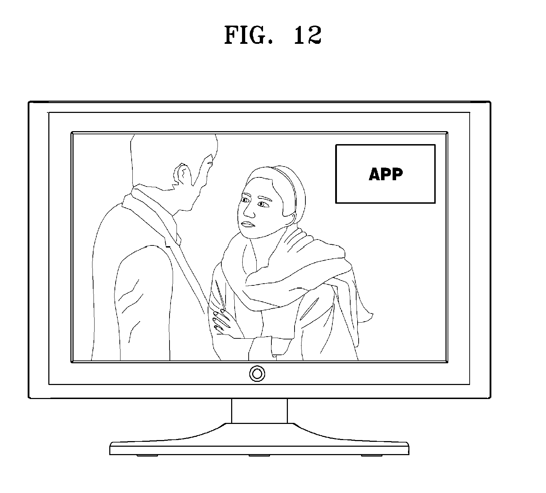

FIG. 12 is a view illustrating a screen displaying an application, according to another exemplary embodiment.

According to another exemplary embodiment, a method of displaying an application and image content screen may be determined according to overlapping information. If overlapping information indicates that an application screen is to be overlapped on an image content screen of image content as illustrated in FIG. 12, while the image content is being displayed, an application screen APP is displayed so as to overlap with the image content screen. If the overlapping information indicates that the application screen should not overlap with the image content screen, as illustrated in FIG. 5, an application screen and image content screen may be respectively displayed in separate regions.

Exemplary embodiments may also be implemented as computer-readable codes on a computer-readable recording medium. The computer-readable recording medium can correspond to any information storage device that may store information which may be read by a computer system.

When the computer-readable codes are read from the computer-readable recording medium and thus executed by a processor, the computer-readable codes are configured to execute operations to implement a method of providing image content according to exemplary embodiments. The computer-readable codes may be written in various programming languages. Also, functional programs, codes, and code segments for implementing the exemplary embodiment may be programmed by one of ordinary skill in the art.

Examples of a computer-readable recording medium include hard disk drives, flash memory, solid state disks (SSDs), magnetic recording media, read-only memory (ROM), random-access memory (RAM), CD-ROMs, optical information storage devices, or the like. In addition, the computer-readable recording medium may also be a distributed network, so that the computer-readable codes are stored or transferred and executed in a distributed fashion.

As described above, according to the exemplary embodiments, an image receiving apparatus may independently receive and use application information. Also, since an application is executed while image content is being displayed on a screen, a user may concentrate more on watching the image content. In addition, interactive applications may be provided by using various sensors that are included in an image receiving apparatus, such as an audio sensor or a camera.

The exemplary embodiments described should be considered in a descriptive sense only and not for purposes of limitation. Descriptions of features or aspects within each exemplary embodiment should typically be considered as available for other similar features or aspects in other exemplary embodiments.

While o exemplary embodiments have been described with reference to the appended figures, it will be understood by those of ordinary skill in the art that various changes in form and details may be made without departing from the spirit and scope of the exemplary embodiments as defined by the following claims.

## Claims

1. A method of providing image content, the method comprising:
detecting application information inserted in an image signal of the image content;
obtaining display time information of the image content from the application information inserted in the image signal;
displaying the image content; and
executing an application corresponding to the image content based on a display time of the image content.

2. The method of claim 1, wherein the application information comprises:
application insertion information inserted in a first frame of the image content which indicates whether the application information is included in the image content; and
image time length information representing a length of time of the image content.

3. The method of claim 2, further comprising obtaining a display start time point of the image content by using the application insertion information.

4. The method of claim 2, further comprising:
when the application insertion information indicates that the application information is included in the image content, identifying whether an application corresponding to the application information is installed in a display device which displays the image content;
if the application is installed in the display device, executing the application based on the display time of the image content; and
if the application is not installed, installing the application in the display device.

5. The method of claim 1, wherein the image content is advertisement content.

6. The method of claim 1, wherein the application information comprises application force stop information indicating whether the application is to be forcedly stopped when displaying of the image content is finished,
wherein the method further comprises, if the application force stop information indicates that the application is to be forcedly stopped, forcing the application that is being executed to stop when the display time of the image content has elapsed.

7. The method of claim 1, wherein the application information comprises at least one of:
application location information indicating a storage location of an execution file of the application;
application execution section information indicating an execution time of the application; and
overlapping information indicating whether the application is to be displayed overlapping an image of the image content.

8. An image receiving apparatus comprising:
a receiver configured to receive image content;
a display configured to display an image signal included in the image content;
an application information detector configured to detect application information inserted in the image signal;
a time information obtainer configured to obtain display time information of the image content from the application information inserted in the image signal; and
an application executor configured to execute an application corresponding to the image content, based on a display time of the image content.

9. The image receiving apparatus of claim 8, wherein the application information comprises:
application insertion information inserted in a first frame of the image content and indicating whether the application information is included in the image content; and
image time length information representing a length of time of the image content.

10. The image receiving apparatus of claim 9, wherein the time information obtainer is configured to obtain information about a display start time point of the image content by using the application insertion information.

11. The image receiving apparatus of claim 9, wherein when the application insertion information indicates that the application information is included in the image content, the application executor is configured to identify whether an application corresponding to the application information is installed in the image receiving apparatus;
if the application is installed, the application executor is configured to execute the application based on the display time of the image content; and
if the application is not installed, the application executor is configured to install the application in the image receiving apparatus.

12. The image receiving apparatus of claim 8, wherein the image content is advertisement content.

13. The image receiving apparatus of claim 8, wherein the application information comprises application force stop information indicating whether the application is to be forcedly stopped when displaying of the image content is finished;
wherein if the application force stop information indicates that the application is to be forcedly stopped, the application executor is configured to force the application that is being executed to stop when the display time of the image content has elapsed.

14. The image receiving apparatus of claim 8, wherein the application information comprises at least one of:
application location information representing a storage location of an execution file of the application;
application execution section information representing an execution time of the application; and
overlapping information representing whether the application is to be displayed overlapping an image of the image content.

15. A computer-readable recording medium having stored thereon computer program codes to execute a method of at least one of claims 1-7 when the codes are read and executed by a processor.
